# EUROPEAN PATENT APPLICATION

(11) **EP 2 942 653 A1**
(43) Date of publication of application: **11.11.2015**
(21) Application number: 14167569.4
(22) Date of filing: 08.05.2014
(51) Int. Cl.: G02B 6/38

(54) **Low cross-talk fiber connector system**

(71) Applicant: ABB Technology AG, 8050 Zürich (CH)
(72) Inventor: Bohnert, Klaus, 5452 Oberrohrdorf (CH); Gabus, Philippe, 1260 Nyon (CH)
(74) Representative: ABB Patent Attorneys

(57) **Abstract**

A fiber connector and related systems are described that include a ferrule (8) for fixing a polariza-tion maintaining (pm) fiber in a central position and ferrule guiding means (1, 16), and a front part (3) and a back part (5), which together lock in a connected state the ferrule (8) together with an elastic element (9) in an axially movable but rotationally fixed position within the connector, and wherein the front part (3) includes first guiding means (11) and second guiding means (12) located at different angular positions along a circumference of the front part (3) and designed to interact with matching guiding means (15, 17) on a mating adaptor (13), with the first guiding means (11) and the second guiding means (12) being different to prevent a 180° ambiguity when connecting the connector to the mating adaptor (13).

## Description

### FIELD OF THE INVENTION

The invention relates to a polarization-maintaining connector to link two polarization-maintaining (pm) optical fibers into a single optical transmission line, preferably with low polarization cross-talk between different optical modes of the fibers at the connection point.

### BACKGROUND OF THE INVENTION

Polarization-maintaining (pm) fibers [1] are highly birefringent and as a result preserve the polarization state of light polarized along the fast or slow principal fiber axis. The polarization maintaining properties of the fiber are characterized by the (undesired) polarization cross-talk between the two orthogonal polarization modes. Typically the coupling of optical power from one polarization state to the orthogonal state is well below -30 dB in a fiber section of 100 m.

In many practical applications it is necessary to join two pm fiber sections. Ideally, the degree of linear polarization should be maintained at the fiber joint, i.e. cross-coupling between the orthogonal modes should be as small as possible. The angular mismatch of the principal axes at the fiber connection must be less than 1.8° in order to keep the power cross-coupling below -30 dB and less than 1.0° for < -35 dB.

Modern fusion splicers for pm fibers are able to align the fiber axes within such tolerances. However, often it is desirable to have a fiber connector instead of a fusion splice in order to conveniently open and close the fiber connection. Several connector designs for optical fibers have been disclosed [2-10]. Commonly, the optical fiber is held by an adhesive in the bore of a ferrule. The ferrule is in firm contact with a ferrule flange. The ferrule flange is held inside a connector body at a defined angular orientation in such a way that the fiber axes have a defined and fixed orientation relative to the connector body. The two connector bodies of a fiber connection are kept at a defined and fixed orientation relative to a mating adaptor between the two connector bodies. As a result, the axes of the joined pm fibers have within the given angular tolerances of the connector parts the same angular orientation.

The angular alignment of the different connector parts is maintained by providing the ferrule flange, connector body, and the mating adaptor with appropriate provisions such as grooves, slots, notches or pins. The connector parts must be movable against each other, which however results in certain tolerances for their angular alignment. Typically, the polarization cross-coupling of commercially available fiber connectors is in the range between -20 dB and -25 dB. In addition to the tolerances in the angular fiber alignment, fiber stress, e.g. from glueing the fiber into the ferrules, can also reduce the degree of linear polarization.

PM fiber connectors are of interest for example in fiber-optic current sensors as described in references [11, 12]. Such sensors may be used to measure current in high voltage substations. Herein, the electronics module of the sensor is on ground potential (e.g. in a cubicle) and the sensor head is on high voltage (e.g. on top of a support insulator) with a polarization-maintaining fiber link in between. In order to facilitate the installation or replacement of the sensor modules, it is desirable to have at least one fiber connector in the fiber link, e.g. at the electronics housing. Preferably, the fiber connector should affect the sensor scale factor, and hence the measured current, by less than 0.1%. For this purpose the polarization cross-coupling at the connector must stay below about -30 dB to -32 dB. For comparison, a change in cross-coupling, for example from -25 dB to -23 dB, as can be encountered with connectors according to prior art, would result in a scale factor change of almost 0.4%.

It is therefore an objective of the invention to disclose a connector design and other provisions that result in significantly reduced polarization cross-coupling and reduced variation of polarization cross-coupling with changes in the ambient temperature compared to the prior art. In particular, the cross-coupling should be below a level at which the connector influences the scale factor of a fiber-optic current sensor by less than 0.1%. For this purpose polarization-cross-coupling is best reduced to levels below -30 dB to -32 dB.

### SUMMARY OF THE INVENTION

Hence, according to a first aspect of the invention, there is provided a fiber connector including a ferrule for fixing a polarization maintaining fiber in a central position and ferrule guiding means, a front part and a back part, which together lock in a connected state the ferrule together with an elastic element in an axially movable but rotationally fixed position within the connector, and wherein the front part includes first guiding means and second guiding means located at different angular positions along a circumference of the front part and designed to interact with matching guiding means on a mating adaptor, with the first guiding means and the second guiding means being different to prevent a 180° ambiguity when connecting the connector to the mating adaptor.

It is the role of the mating adaptor to act as middle part or joint between two connectors, each of which is carrying the end of a pm fiber. If both connectors are designed according to the principles of the present invention, the mating adaptor carries matching guiding means on two ends.

The difference between the design of the first guiding means and its respective matching guiding means on the mating adaptor, on the one hand, and the second guiding means and its respective matching guiding means, on the other hand, is such that a coupling of a connector with its mating adaptor is prevented when the first guiding means are pushed against the matching second guiding means or the second guiding means are pushed against the matching first guiding means.

The angular positions of the first guiding means and the second guiding means are separated best by 180°, i.e. by a circumferential separation angle of 180°.

The guiding means and their respective matching guiding means can be implemented as a system of pins and matching notches, with the pins preferably extending in radial direction and the notches preferably in axial direction (with respect to the fiber axis).

To prevent a mis-coupling or a 180° ambiguity, the pins and notches associated with one set of guiding means can have different diameters or cross-sections than those associated with the second set. Hence, the coupling between the connector and its mating adaptor is not possible when trying to insert the bigger pin of one guiding means into the smaller notch of the second guiding means.

In another preferred embodiment, it can be advantageous to permanently connect a connector and a mating adaptor, thus forming for example a connector unit which can easily be mounted onto a housing. With such a device a fiber connection can be established easily and fast by inserting a second connector into the assembled first connector and the mating adaptor. Such an arrangement can be particularly useful to provide an optical fiber connection through the wall of a housing. Such a housing can for example provide a thermally insulated or controlled environment for optoelectronic components. By mounting the assembly of connector and mating adaptor onto the wall of the housing such that the adaptor is accessible from the outside, an optical fiber connection into the interior of the housing can rapidly be established by connecting the second (external) fiber connector to the adaptor.

However, it is also possible to permanently have the mating adaptor mounted to a mount external of the housing. The first connector will then be passed through an opening in the housing and be connected to the external unit of a mating adaptor (and second connector).

It is particularly advantageous to provide such connection-ready housing for fiber optical sensors with a housing enclosing further optic and optoelectronic components, and electronic signal processing means with such components and means comprising elements measuring a differential phase shift between two optical modes of the fiber passing through the connector. Such an embodiment enables for example a faster and safer installation of fiber optical sensors attached to high voltage installations.

Possible cross-talk between fiber modes at the connectors can be further reduced when using an assembly which combines and thermally couples the connector or connectors as described above with a temperature control (in the simplest case a heat source) within a thermally insulating shell. Such an assembly advantageously reduces thermally induced cross-talk and would be less efficient without the use of the precision connection as described above.

A further aspect of the invention combines a first fiber connector and a second fiber connector coupled through a mating adaptor using as first connector a connector having a positive alignment error and as the second a connector having a negative alignment error, with both alignment errors being determined prior to establishing the connection. Using for example a proper marking and selection procedure, error-compensated fiber connections can be provided with smaller alignment error than the individual connectors.

The above and other aspects of the present invention together with further advantageous embodiments and applications of the invention are described in further detail in the following description and figures.

### BRIEF DESCRIPTION OF THE FIGURES

FIG. 1A is a perspective view of a fiber connector in accordance with an example of the invention;
FIG. 1B is a cross-section of the fiber connector of FIG. 1A along its central axis;
FIG. 1C is an exploded view of the fiber connector of FIG. 1A;
FIG. 2A is a cut-away perspective view of a detail of FIG. 1 along the central axis;
FIG. 2B is a cross-section of the detail of FIG. 2A along the central axis;
FIG. 2C is a partial cross-section perpendicular to the central axis of the detail of FIG. 2A (cross-section through ferrule flange and connector body in plane of a pin);
FIG. 3A is a perspective view of a mating adaptor for a fiber connector in accordance with an example of the invention;
FIG. 3B is a cut-away perspective view of the mating adaptor of FIG. 3A;
FIG. 3C is a partial cross-section perpendicular to the central axis of the mating adaptor of FIG. 3A (cross-section through a notch);
FIG. 4 is a cut-away perspective view of the connector of FIGs. 1 and 2 coupled to the mating adaptor of FIGs. 3 and being positioned before a calibration device;
FIGs. 5A and 5B illustrate schematically a temperature-stabilized example of a connector in accordance with another aspect of the invention in a horizontal and vertical cross-section, respectively; and
FIG. 6 shows a circuit breaking system including connectors in accordance with an example of the invention.

### DETAILED DESCRIPTION

Modern fiber connectors such as ferrule connectors (FC) typically use a "physical contact" (PC) polish on the fiber and ferrule end. This is a slightly curved surface, so that when fibers are mated only the fiber cores touch, not the surrounding ferrules. Some manufacturers have several grades of polish quality, for example a regular FC connector may be designated "FC/PC" (for physical contact), while "FC/SPC" and "FC/UPC" may denote "super" and "ultra" polish qualities, respectively.

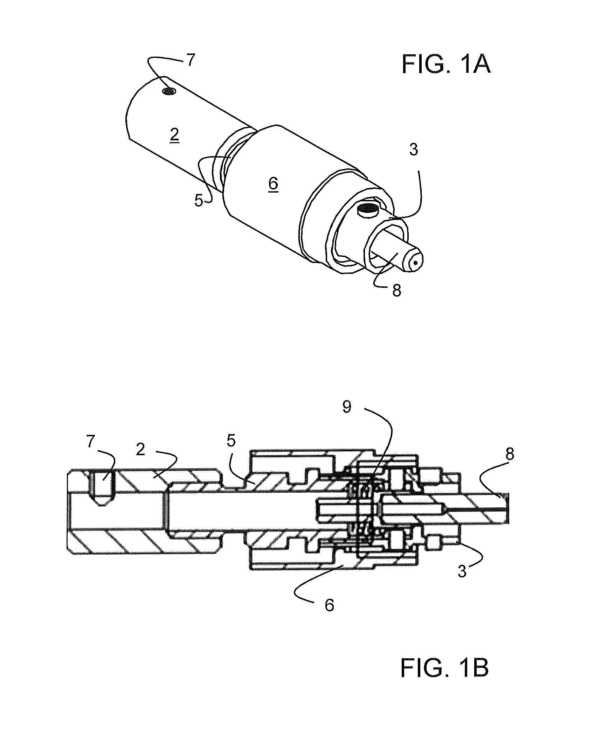

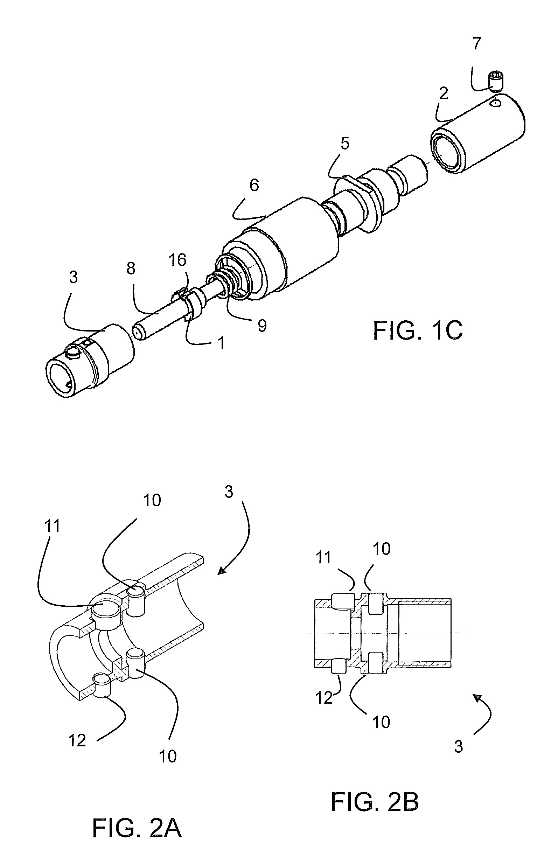

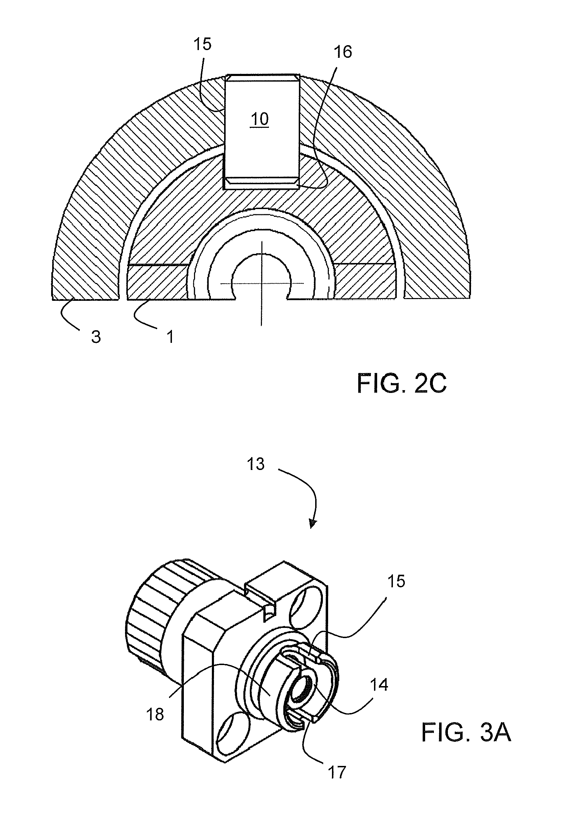

The example is also based on a FC/PC connector type. The FIGs. 1 and 2 show the individual parts of such a connector in different perspectives illustrating both elements as known in the prior art and modifications according to an example of the present invention.

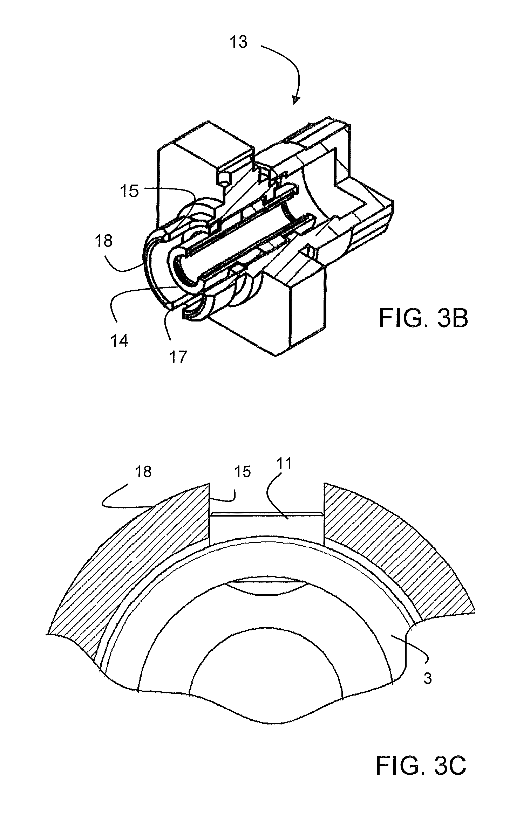

The connector as shown in the perspective view of FIG. 1A includes a front part 3 and a back part 5, both of which interact to hold a fiber ferrule 8 in a defined position. The fiber ferrule 8 has a central bore into which a PM fiber can be inserted and be fixed. The back part 5 is attached to a sleeve holder part 2 with a screw 7 used to attach a protective fiber sleeve (not shown). A coupling nut 6 with a screw thread is used as fixing means to a mating adaptor (see FIGs. 3).

Further details are shown in the exploded view of the connector in FIG. 1C. The pm fiber (not shown) is held in the bore of the ferrule 8 by means of an adhesive. The ferrule 8 is held by a ferrule flange 1 through notches or grooves and matching pins. The ferrule flange 1 itself is held in place inside the connector body consisting of the front part 3 and the back part 5. Thereby, the back part 5 acts as a stop for a spring 9. The spring 9 pushes the ferrule flange 1 with the ferrule 8 towards a stop inside the front part 3 of the connector body, or, respectively, towards the ferrule of a second connector of a fiber connection. To close a fiber connection, the ferrule 8 is inserted into a central tube 14 of a mating adaptor 13, which is shown in FIGs. 3. The coupling nut 6 is connected with mating adaptor 13 by means of a screw thread and therewith fastens the connector body 3, 5 to the mating adaptor 13. To make a fiber connection a second connector can be attached to the mating adaptor 13 from the opposite side in the same way.

The pm fiber is glued into the ferrule 8 with its axes pre-aligned with respect to the notches 16 or similar positioning or orientation means of the ferrule flange 1. The ferrule flange 1 is kept at a defined rotational angle relative to front part 3 of the connector body by means of the pins 10, which are inserted into the notches of the flange 1 at assembly of the connector. For this purpose the pins 10 are rigidly attached to front part 3 and engage with the notches of the ferrule flange 1 as shown in greater detail in FIGs. 2A, 2B and 2C.

To achieve the desired reduction in cross-talk, the pins 10 in the front part 3 have in this example a nominal diameter of 1.25 mm with reduced tolerances of +0.002 and +0.008 mm. The two notches 16 on opposite sides of the ferrule flange 1 (only one notch is shown) have a nominal width of 1.25 mm with tolerances of -0.00 mm and +0.02 mm. The maximum gap between the pin surface and the notch edges is then [(1.27 - 1.252)/2] mm = 0.009 mm. With the given radius of the ferrule flange (2.25 mm) this gives a maximum angular tolerance of ±atg (0.009/2.25) = ±0.23°. [atg = arctan]. For comparison, typical commercially available parts have tolerances of up ±1.5° or even ±2.5°.

The mating adaptor 13 for accepting two juxtaposedly inserted connectors as described above is shown in further detail in FIGs. 3A, 3B and 3C.

The mating adaptor 13 has the central tube-shaped part 14 for insertion of the exposed tips of the two fiber-carrying ferrules 8 of the connectors. The tube 14 is surrounded and protected by a sleeve 18. The sleeve 18 has two notches or cuts 15 and 17. In the example the notches 15, 17 are separated by 180° along the circumference of the sleeve 18. The two notches 15, 17 have different width (in this example the notch 17 is smaller in width than the notch 15). The mating adaptor 13 has a threaded part (not shown) to fix the connection through a tightening of the coupling nut 6.

The front part 3 is kept at a fixed angle relative to mating adaptor 13 by the pin 11 and the smaller pin 12. As described above the pin 11 is attached to the front part 3 and slides into the matching notch 15 of the mating adaptor 13 thereby maintaining a defined angle between the connector body 3, 5 and the mating adaptor 13. The additional smaller pin 12 positioned opposite to the pin 11 slides with the same connecting movement into the corresponding additional matching notch 17 of the mating adaptor 13. The purpose of the additional pin 12 and notch 17 is to further restrict rotation of the connector body 3, 5 inside the casing of the mating adaptor 13. The pins 11 and 12 have different diameters in order to exclude 180°-ambiguity when inserting the connector body 3, 5 into the mating adaptor 13.

The described angular fixations ensure that the axis directions of the two joined pm fibers coincide within the tolerances of the various mechanical parts. The tolerance of the pm fiber alignment in ferrule 8, the clearance of pins 10, 11, 12 in the notches of ferrule flange 1 and mating adapter 13, respectively, as well as the angular misalignment between the two notches 15, 17 of the mating adapter 13 all combine to determine the angular uncertainty between the pm fiber axes.

Based on this design several modifications are made in combination with further measures in order to reduce the angular tolerances of the fiber axes alignment.

Referring further to FIG. 3C, the critical tolerances that determine the orientation of the connector body 3, 5 in the mating adaptor 13 are reduced in the novel design. Such the pin 11 of connector front part 3 has a nominal diameter of 2.000 mm with tolerances of +0.002 and +0.008 mm. The notch 15 in the mating adaptor 13 has a width of 2.02 mm with tolerances of 0.0 mm and -0.01 mm. Given the inner radius of the mating adaptor sleeve 18 of 3.45 mm, this results in a maximum angular misalignment of the connector body 3, 5 with respect to the mating adaptor 13 of ±0.15°.

With the reduced angular tolerances of the ferrule flange 1 and the connector body 3, 5 the total angular uncertainty of the ferrule orientation with respect to the mating adaptor 13 is about ±0.4°. The uncertainty of the fiber orientation with respect to the ferrule 8 is also about ±0.4° and is determined by the equipment used for fiber alignment. As a result the maximum total alignment error of the fiber axes with respect to the mating adaptor 13 is ±0.8° using the above design.

The two notches 15, 17 on the two sides of the mating adaptor 13 have some tolerance in their relative angular alignment which also contributes to the uncertainty in the relative alignment of the fiber axes. In adequately improved adaptors the alignment tolerances are reduced from typically 1° to 0.2°.

With the combined measures as described above the total maximum misalignment between the axes of the two connected fibers (i.e. the sum of tolerances for the fiber in the ferrules 8, the ferrule flanges 1, the connector body 3, 5, and the adaptor notches 15, 17) corresponds to about 1.8°. The associated maximum polarization cross-talk is -30 dB.

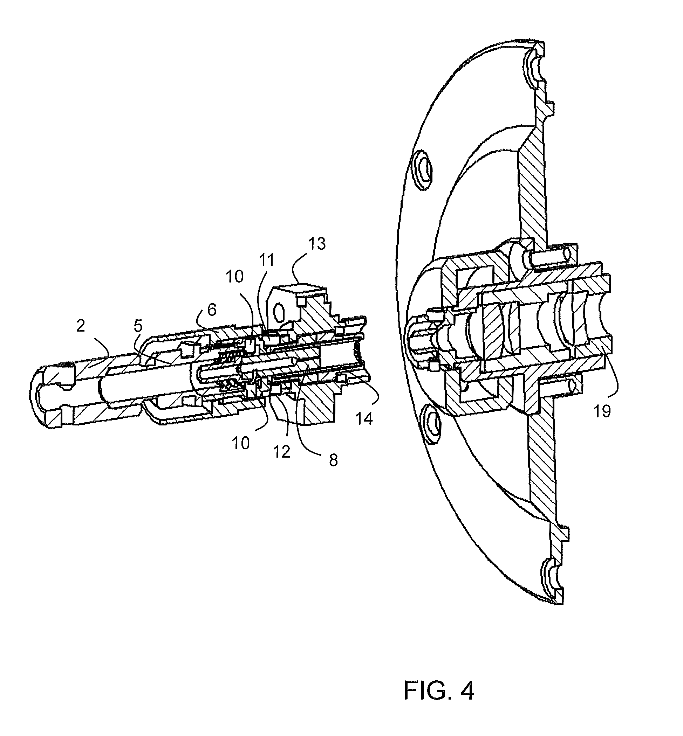

In order to further reduce the actual alignment error between the two connected fibers the total error (or error range) of a given individual connector is measured and the connector coded accordingly. For this purpose a connector to be coded is inserted into a reference adaptor that is part of a test system as illustrated in FIG. 4.

In FIG. 4 a connector is shown inserted into a mating adaptor 13 as described in detail above. The second side of the mating adaptor 13 can be inserted into the matching front part of a collimating optics 19. The collimating optics 19 bundles light from the fiber in ferrule 8 into a collimated light beam. The collimating optics 19 is followed by a rotatable polarizer and a photo-detector (not shown). Polarized light is injected into the pm fiber from the opposite end with the polarization parallel to one of the principal axes of the pm fiber. (A well-polarized free-space laser beam may be coupled into the fiber or the light may be injected into the fiber through a fiber polarizer). The optical power at the photo-detector after the collimating optics is then measured as a function of the polarization direction of the rotatable polarizer. From the polarizer angle of minimum detected power the actual angle of the fiber axes and its deviation from ideal alignment can be inferred. The procedure may be repeated a number of times in order to assess the error range of the connector 3, 5.

The connector 3, 5 is then coded according to its range of alignment error. A color code or another type of code may be used. For example, connectors with alignment error between -0.4° to +0.4° may be left un-coded, connectors with alignment error between +0.4° to +0.8° may be coded with red color, and connectors with alignment error between -0.4° to -0.8° may be coded with blue color. Combinations of two uncoded connectors or combinations of a blue and a red coded connectors give then a maximum alignment error of only 0.8° instead of 1.6° without this measure (neglecting the error from the mating adaptor 13). The corresponding maximum polarization cross-coupling is reduced from -31 dB to -37 dB. The corresponding numbers are about -30 dB and -35 dB, if one takes in account an extra error of 0.2° from the mating adaptor 13. (Note that the numbers do not reflect potential contributions from fiber stress in the connector. Provisions to minimize fiber stress are not particular subject of the present invention).

A graded index lens in the sleeve of the mating adaptor 13 may be used to collimate the light for sending it to the rotatable polarizer. With this measure the alignment error associated with angular tolerances of the connector body 3, 5 in the mating adaptor 13 are eliminated. Furthermore, misalignment between the notches on the two sides of mating adaptor 13 can be included in the connector coding.

In many practical applications it is only necessary to separate one of the two connectors from the mating adaptor 13, with the mating adaptor 13 and one connector being pre-assembled to connect optical components to the connector. For example, the mating adaptor 13 may be mounted to the shell or housing of an opto-electronics module that houses the signal processing electronics of a sensor such as described in references [11, 12], and in particular houses the sensor opto-electronic components (light source, photo-detectors) and some fiber-optic components, in particular optic components for introducing a defined phase shift between two optical modes of the fiber and/or for detecting a phase shift between modes. The latter components are important elements of a fiber optical current sensor for high voltages.

According to the state of the art, the pm connectors on the inside as well as on the outside of the housing are detachable from the mating adaptor 13, which is typically directly or indirectly in a fixed mechanical connection with the housing. However, for installation or replacement of the electronics module it is commonly sufficient, if only the outer connector is detachable. It is therefore another feature of the invention that one of the two connectors is permanently connected to the mating adaptor 13. Hence, the combination of the connector 3, 5 and the mating adaptor 13 as shown for example in FIG. 4 can be regarded as a unit mounted onto the wall of a housing (not shown), with the opposite end of the mating adaptor 13 providing a connection point for a second connector 3, 5 accessible from the outside of the housing. Accidental disconnection of the connector 3, 5 and the mating adaptor 13 can then prevented by an adhesive or equivalent means. The measurement for determining the alignment error and coding the connector are then done for the total assembly of connector 3, 5 and mating adaptor 13.

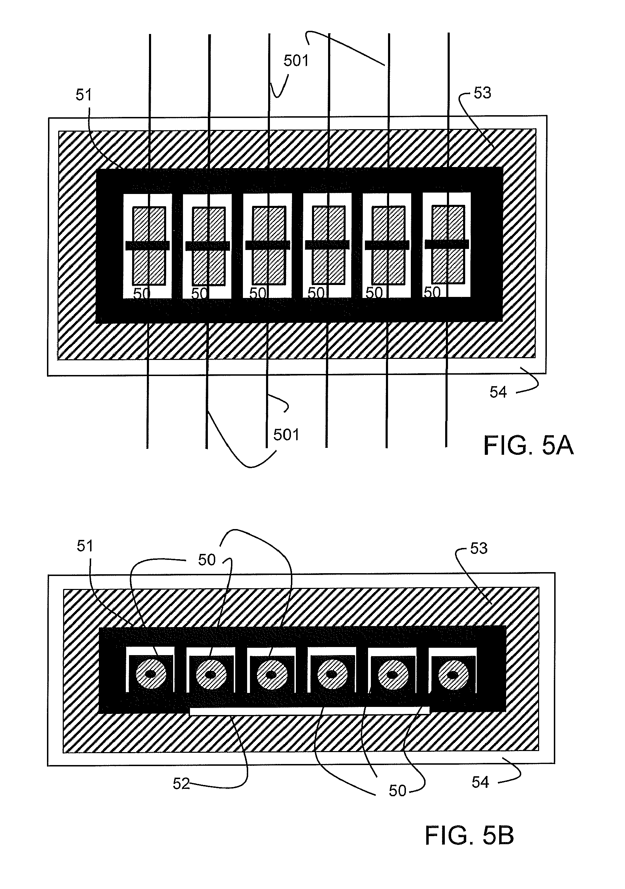

Another major reason for excessive polarization cross-talk at individual connectors and connector pairs are variations in the ambient temperature. Particularly, low temperatures induce extra fiber stress, for example by hardening the adhesive in the connector ferrules and thus enhance the polarization cross-talk. Hence, a method to minimize the cross-talk variation is to temperature-stabilize a connector pair or a set of connector pairs as shown in FIG. 5. In order to avoid provisions for cooling, e.g. thermoelectric coolers, the connectors are preferably heated by a controlled heat source in order to maintain a certain minimum connector temperature. For example, if the ambient temperature can vary between -25°C and 65°C and the heat source keeps the connector pair at 65°C, essentially no variation of the connector temperature will occur. But even if the heat source is designed to maintain a minimum temperature of 40°C, the maximum variation of the connector temperature is still restricted to the range between 40 and 65°C (instead of -25°C to 65°C).

An example of a set-up for stabilizing the connector is shown in FIG. 5 with an assembly of six connector pairs 50 each connected by a mating adaptor 13 as described above. Each connector pair 50 is within an individual hollow volume of a metal block 51, e.g. from aluminum or copper. The block 51 may be a single piece of metal or be assembled from two or more sub-parts. The metal block 51 is in contact with a temperature controller 52, such as a regulated heating element 52, which keeps the block at a desired minimum temperature. As a result of the high thermal conductivity of the metal block 51 the temperature gradient within the block 51 and thus across the fiber connector pairs 50 is minimized. Temperature variations and resulting gradients may occur as a result of an on/off heater control or during changes of the ambient temperature and resulting heat flows. To reduces such fluctuations, the metal block 51 and temperature controller 52 are shown thermally insulated from an outer enclosure 54, e.g. by a thermally insulating layer 53 of foam of low thermal conductivity.

In the simplest case the temperature of the block 51 is stabilized by means of a self-regulated heating foil resistor as temperature controller 52. The resistor material has a strong positive thermal coefficient and acts as a "thermal diode". As a result the heat power at a given voltage (for example 24 V) is high at low temperatures, gradually decreases with increasing temperature, and approaches zero at a designable temperature threshold, e.g. 65°C. Additional regulating electronics is not required in such a set-up. Alternatively, the temperature may be stabilized by means of one or several heating resistors with the current through them being controlled by electronics.

In a more sophisticated arrangement, the temperature may be controlled by means of a thermo-electric cooler/heater that is able to maintain an arbitrary constant temperature, e.g. 25°C.

The optical fibers 501 of the connector pairs 50 (including the connector bodies 3, 5 and mating adaptors 13) may enter and leave the outer enclosure box 54 and the metal block 51 individually as shown in FIG. 5A, or they may be bundled in one or several cables which enter and leave the box 54. For example, in FIG. 5A the two fibers of a connector pair 50 enter the temperature controlled unit through two separate openings of the heating unit (here at opposite sides of the unit). Alternatively, the fibers may enter the unit through a common opening.

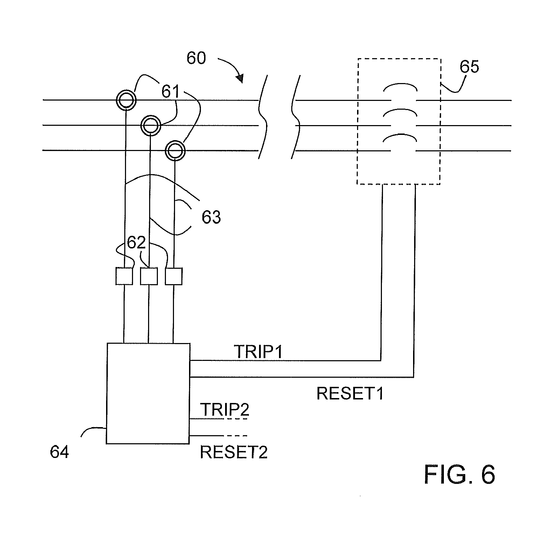

As already mentioned in the background section of the present description, the aspects of the present invention can be applied either in isolation or combined, particularly for high voltage application (e.g. above 20 kV or 35 kV). In FIG. 6 there is shown the schematic example of a high voltage fault current protection system with a current sensor including three FOCS probes 61, each being positioned to measure the current through one of the three phases of a high-voltage power line 60. The FOCS probes 61 are commercially available and are described for example in references [11, 12].

The FOCS system utilizes the Faraday effect to measure current. The probe includes a loop of optical sensing fiber wound around a power line, power cable, or process bar. The Faraday effect can be observed when left and right circularly polarized light waves travelling through a magneto-optic material are exposed to a magnetic field. As a result, the waves accumulate a phase difference. In a typical FOCS system, right and left circularly polarized light waves travel through the coil of the sensing fiber. At the end of the fiber, they are reflected (and their polarization directions are swapped) and then retrace their optical path to an opto-electronic sensor module 62 via a fiber-optic cable 63. The sensor module 62 is typically a housing which contains the light source, an optical phase shift detection circuit, other optical components such as beamsplitters, photodetectors and digital signal processing elements (DSP). The digital signal processor within the module 62 converts the optical phase difference into a digital signal, which can then be transmitted for analysis to a relay 64 which in turn can generate trip signals for a circuit breaker 65. Instead of using three separate modules 62 as shown the sensor module 62 may be a single common module for the FOCS probes 61 of three electric phases.

Given the nature of the measuring principle, the fiber-optic cable 63, which transmits light between the sensing fiber 61 wound around the current path 60 and the optical components in the sensor module 62, comprises a polarization maintaining (PM) fiber. To ensure the required accuracy, the PM fiber is connected in known current sensors through splicing to both the sensing fiber and the optical components.

The various aspects of the present invention, however, allow to introduce an intermediate connection between two sections of the PM fiber 63 while maintaining the accuracy of the current measurement. Such connection can conveniently be introduced for example at the wall of the housing of the sensor module 62. Thus, a section of PM fiber 63 being wholly in the interior of the housing can connect optical components of the sensor module 62 to an optical port within the wall. The optical port can be a mating adaptor 13 as described above attached to the housing of the module 62 and connected to a section of the fiber passing through the interior of the housing while exposing the other side of the adaptor to the outside. An exterior section of the PM fiber, which at its distal end is connected to the sensing fiber and which has a connector at its near end, can then be applied to complete the optical path between the sensor module 62 and the sensing fiber 61.

In this manner, the installation and maintenance of fiber-optic current sensors is greatly facilitated compared to known ways of installing such sensors through splicing. It should be further noted that in order to increase the accuracy of the current sensor of FIG. 6, the connector can be a thermally stabilized connector as described above with reference to FIG. 5. Preferably, the thermally controlled unit containing the temperature-stabilized connectors is then attached to an outer surface of sensor module 62 such that the unit can also in addition to reducing thermal stress provide a mechanical protection of the fiber sections between module 62 and the module-sided connectors. With this measure these fiber sections will not require extra protective cabling. Alternatively, the unit containing the temperature-stabilized connectors may be mounted inside the sensor module 62 or may be separated from the module 62.

It is obvious that the invention may be applied not only to fiber-optic current sensors, but also to other types of sensors or optical systems using polarization-maintaining (pm) fiber. Examples include optical strain and voltage sensors, as described e.g. in [13, 14].

While there are shown and described presently preferred embodiments of the invention, it is to be understood that the invention is not limited thereto, but may be otherwise variously embodied and practiced within the scope of the following claims.

### REFERENCES CITED

[1] J. Noda, K. Okamoto, and Y. Sasaki, "Polarization-maintaining fibers and their applications, J. Lightwave technology 4, 1071, 1986.
[2] US 7,387,446 B2
[3] US 5,946,436
[4] US 7,052,188 B2
[5] US 7,018,108 B2
[6] US 6,705,765 B2
[7] WO 2004/090596 A1
[8] DE 696 04 172 T2
[9] EP 1 258 757 A1
[10] US 6,264,372
[11] K. Bohnert, P. Gabus, J. Nehring, H. Brändle: J. Lightw. Technol. Vol. 20 (2002), p. 267.
[12] K. Bohnert, P. Gabus, J. Nehring, H. Brändle, M. G. Brunzel: J. Lightw. Technol. Vol. 25 (2007), p. 3602.
[13] S. Wildermuth, K. Bohnert, and H. Brändle, "Interrogation of a birefringent fiber sensor by non-reciprocal phase modulation", IEEE Photonics Technology Letters vol. 22, pp. 1388-1390, 2010.
[14] X. Feng, L. Li, X. Wang, C. Zhang, J. Yu, and C. Li, "Birefringence elimination of bismuth germanate crystal in quasi-reciprocal reflective optical voltage sensor", Applied Optics, vol. 52, pp. 1676-1681, 2013.

### LIST OF REFERENCE SIGNS

- 1: ferrule flange
- 2: sleeve holder part
- 3: front part
- 5: back part
- 6: coupling nut
- 7: screw
- 8: fiber ferrule
- 9: spring
- 10, 11, 12: pin
- 13: mating adaptor
- 14: central tube
- 15, 16, 17: notch
- 18: adaptor sleeve
- 19: collimating optics
- 50: connector pairs
- 51: metal block
- 52: temperature controller
- 53: thermally insulating layer
- 54: outer enclosure
- 501: connector fibers
- 60: 3-phase current path
- 61: sensing fibers
- 62: opto-electronic module
- 63: PM fibers
- 64: relay
- 65: circuit breaker

## Claims

1. A fiber optic connector comprising
a ferrule (8) for fixing a polarization maintaining fiber in a central position with ferrule guiding means (1, 16), and a front part (3) and a back part (5) locking in a connected state the ferrule (8) together with an elastic element (9) in an axially movable but rotationally fixed position within the connector, wherein the front part (3) comprises first guiding means (11) and second guiding means (12) separated along a circumference of the front part (3) and designed to interact with matching guiding means (15, 17) on a mating adaptor (13), with the first guiding means (11) and the second guiding means (12) being different to prevent a 180° ambiguity when connecting the connector to the mating adaptor (13).

2. The connector of claim 1, wherein the first guiding means (11) and the second guiding means (12) are separated by 180°.

3. The connector of claim 1 or 2, wherein the first guiding means (11), the second guiding means (12) and their respective matching guiding means (15, 17) each comprise a system of pins and matching notches.

4. The connector of claim 3, wherein the pins extend in radial direction and the notches in axial direction with respect to the fiber axis.

5. The connector of claim 3 or 4, wherein the pins and notches of a first system comprising the first guiding means (11) and their matching guiding means (15) have a different diameter and/or width and/or cross-section than the pins and notches of a second system comprising the second guiding means (12) and their matching guiding means (17).

6. A connector (3, 5) in accordance with any one of the claims 1 to 5 being essentially permanently connected to the mating adaptor (13), with the mating adaptor comprising further sets of the matching guiding means (15, 17) on the opposite face for connection to a second connector (3, 5).

7. A fiber connection comprising a first fiber connector (3, 5), preferably in accordance with any one of the claims 1 to 6, and a second fiber connector (3, 5), preferably in accordance with any one of the claims 1 to 6, coupled through a mating adaptor (13), wherein the first connector (3, 5) has a positive alignment error and the second connector (3, 5) has a negative alignment error, with both alignment errors being determined prior to establishing the fiber connection.

8. A pair of fiber connectors (3, 5) with a mating adaptor (13), each fiber connector (3, 5) preferably in accordance with any one of the claims 1 to 7, wherein the connector pair (3, 5) and the mating adaptor (13) are thermally coupled to a temperature controller (52), preferably a heat source (52), and wherein the temperature controller (52) and the connector pair (3, 5) and the mating adaptor (13) are encapsulated in a thermally insulating shell (54) having openings for fibers.

9. Opto-electronic sensor module (62) with an outer shell, **characterized in that** a section of polarization maintaining (pm) fiber within the interior of the outer shell provides an optical path between a connector (3, 5) being in accordance with any one of the claims 1 to 8 and further optic and opto-electronic components, with such components comprising at least elements adapted to measure a differential phase shift between two optical modes of the PM fiber, and wherein the connector (3, 5) is connected in operation to a mating adaptor (13), which in turn is mounted to the outer shell or other parts of the sensor module (62) and provides a connection point for a second (exterior) section of pm fiber terminated with another connector (3, 5) in accordance with any one of the claims 1 to 8.

10. The opto-electronic sensor module (62) of claim 9, wherein a pair of connectors (3, 5) and a mating adaptor (13) are thermally coupled to a temperature controller (52), preferably a heat source (52), and wherein the temperature controller (52) and the pair of connectors (3, 5) and the mating adaptor (13) are encapsulated in a thermally insulating shell (54) having openings for the connecting fibers, with the thermally insulating shell (54) being at least part of the outer shell of the module (62) or being mounted within the interior or to the exterior of the outer shell.

11. Optical sensor comprising a sensing fiber (61) connected to a section of a pm fiber (63), **characterized in that** the pm fiber (63) terminates in a connector (3, 5) adapted to connect to the connection point of an opto-electronic sensor module (62) in accordance with claim 9 or 10.
